(19) Europäisches Patentamt
European Patent Office
Office européen des brevets

(11) **EP 4 358 381 A1**

(12) **EUROPEAN PATENT APPLICATION**

(43) Date of publication:
**24.04.2024 Bulletin 2024/17**

(21) Application number: **22383006.8**

(22) Date of filing: **20.10.2022**

(51) International Patent Classification (IPC):
*H02M 1/00* (2006.01)   *H02M 3/335* (2006.01)

(52) Cooperative Patent Classification (CPC):
**H02M 3/33584; H02M 1/0058; H02M 3/33561**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **SGRE-Association
Siemens Energy Global GmbH & Co. KG
SE I IM P Intellectual Property
Siemenspromenade 9
91058 Erlangen (DE)**

(54) **ZERO VOLTAGE SWITCHING CONTROL METHOD FOR POWER CONVERTERS**

(57) The invention refers to a control method for power converter, that assures operation under Zero Voltage Switching (ZVS) condition in a broad power range in a reliable manner, and which is easy to implement. The control method for operating a DC-DC isolated converter, comprises operating the converter by modifying the switching frequency (*fsw*) and the phase shift ($\varphi$) of the converter, to operate the converter under Zero Voltage Switching condition. The invention is especially applicable to multi-port converters, that is, to converters having three or more converters coupled to a common multi-windings transformer.

FIG. 4

**Description**

TECHNICAL FIELD

The present invention relates to a control method to operate a power converter under Zero Voltage Switching (ZVS) condition.

BACKGROUND OF THE INVENTION

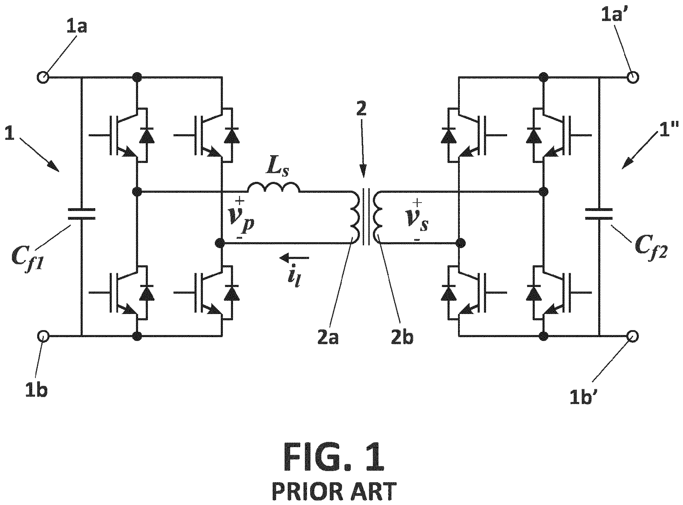

This invention proposes a control method for a well-known power electronics topology called Dual Active Bridge (DAB). The invention may be applicable to some of its variants as well (such as multi-ports DABs). **Figure 1** shows a schematic of this DAB topology. A DAB is a bidirectional DC-DC converter with primary and secondary side full-bridges (1,1") or half-bridge, a high frequency transformer (2), an energy transfer inductor (Ls) and DC-link capacitors (Cf1,Cf2).

The two legs of both full-bridges (1,1") are driven with complimentary square-wave pulses. Power flow is controlled by phase-shifting the pulses of one bridge with respect to the other. The control directs power between the two DC buses such that the leading bridge delivers power to the lagging bridge.

Dual Active Bridge (DAB) converters, typically operate under Zero Voltage Switching (ZVS) conditions at semiconductors turn-off or Zero Current Switching conditions (ZCS) at semiconductors turn-off. These two conditions imply no switching losses at turn-on or turn-off, respectively.

Each semiconductor of the topology can operate under ZVS or ZCS condition during one switching cycle. Due to easiness of implementation, it is preferred to work under ZVS rather than ZCS.

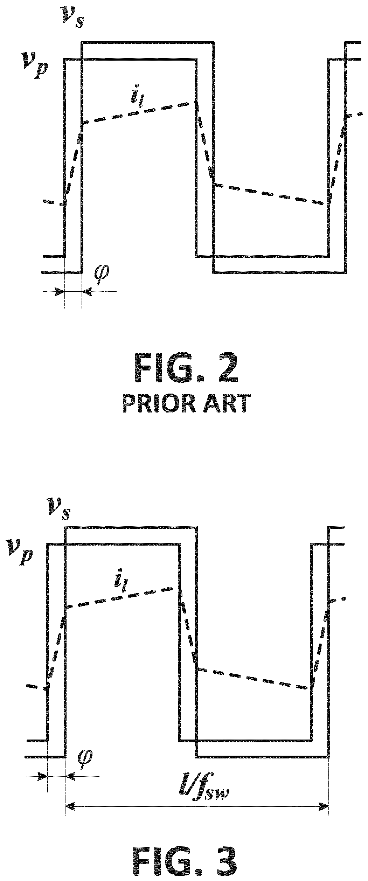

The most commonly used control strategy is called "phase shift control" and is shown in **Figure 2.** With this method, the phase displacement is introduced among the square voltages, (Vp and Vs), created by each bridge of the topology (left-side bridge and right-side bridge in **Figure 2).** The higher the phase shift ($\varphi$), the higher the amplitude of the inductor current (il), and thus the power transferred from one bridge to the other.

However, if the phase shift control is used, the converter may lose the ZVS condition at turn-on depending on the operating point (power, input and output voltages). Moreover, large currents through the semiconductors at the switching instant may occur. If previously mentioned situations arise, significant increase in the switching loses will appear.

To avoid losing ZVS and/or ZCS, there are several control solutions for the DAB topology. These solutions imply modifying the duty cycle of each semiconductor bridge. Although they are able to maintain ZVS and/or ZCS along multiple voltage and power ranges, its implementation is cumbersome and time consuming. This implementation complexity is even larger when these techniques are used for multiport topologies, resulting in a non-solid solution for industrial application and large durability products.

Therefore, there is a need for Zero Voltage Switching (ZVS) control methods, that solve the above-described drawbacks of the prior art.

SUMMARY OF THE INVENTION

An object of the invention is the provision of a control method for a power converter, that assures operation under Zero Voltage Switching (ZVS) condition in a broad power range and in a reliable manner, and which is easy to implement.

The invention is especially applicable to multiport converters for battery balancing, that is, to converters having three or more converters coupled to a common multi-winding transformer.

The invention is a method to maintain ZVS condition of a DC-DC converter by modifying the switching frequency (*fsw*) and the phase shift ($\varphi$) of the converter.

Therefore, an aspect of the invention refers to a control method for operating a DAB-based power converter under Zero Voltage Switching, ZVS, conditions, wherein the converter is a DC-DC isolated converter, and the method comprises operating the converter by modifying the switching frequency (*fsw*) and the phase shift ($\varphi$) to operate the converter under Zero Voltage Switching condition.

This dual control to maintain ZVS, is reliable in a wide range of power and easy to implement, especially for multiport converters, so that, the converter can be optimized and designed neglecting the turn-off losses.

Preferably, the converter is operated such that the output power (P) of the converter is represented by the expression:

$$P = K \cdot \frac{f\left(\varphi\right)}{f\mathrm{sw} \cdot \mathrm{Ls}}$$

wherein (K) is a constant, ($\varphi$) is the phase shift angle, *(fsw)* is the switching frequency and (Ls) is the equivalent inductance value of an inductor or inductors connected in series between the two bridges of the converter.

The proposed control contains two control loops. A fast control loop in charge of ensuring that power is delivered to the load, and a second control loop, slower that the first one, with the aim of ensuring ZVS in all devices. As shown in equation above, either the phase shift ($\varphi$) or the switching frequency (*fsw*) can modify the power delivered, such that, one of these two variables is chosen to ensure ZVS and the other one to guarantee the power delivery.

Given a status of the converter with a certain voltage, current, switching frequency and or power, it is possible to obtain the value of the variable ($\varphi$, *fsw*) that regulates the ZVS. Once this value is adjusted, the other variable that regulates the power will vary to reach the desired reference. Along this process, since both variables affect the output power, an iterative process is carried out until steady state is fully reached.

To have the ZVS variable value it is necessary to obtain the required value for each semiconductor and then retain the most restrictive value. This value can be computed during operation or have it precalculated and stored in the system memory.

In a preferred example, the minimum phase shift ($\varphi$) value, may be calculated analytically by computing the minimum phase shift of each semiconductor switch of the converter, and selecting the maximum phase shift obtained.

Alternatively, the minimum phase shift ($\varphi$) value, may be obtained by measuring current through an inductor (Ls) connected in series between two bridges of the converter and during the switching process.

In a preferred example of implementing the invention, the control method comprises setting a switching frequency *(fsw)* to assure ZVS operation of the converter, and controlling power transfer by controlling phase shift ($\varphi$) in the converter.

Increasing both the phase shift ($\varphi$) and the switching frequency *(fsw),* makes easier to guarantee ZVS, but it rises the reactive current and the switching losses at turn-off (ZVS implies no loses at turn-on). If desired, it is possible to evaluate between reducing reactive power by decreasing ($\varphi$) and increasing *(fsw),* or reduce the switching loses by increasing ($\varphi$) and reducing switching frequency *(fsw).*

In a preferred embodiment of the invention, the DC-DC converter may be a two-port Dual Active Bridge (DAB) converter that comprises a transformer having two windings, and a first bridge converter coupled to a winding of the transformer, and a second bridge converter connected to the other winding of the transformer, and an inductor connected in series between the output port of one of the bridge converters and the winding connected to it.

When a two-port Dual Active Bridge (DAB) converter is used, it is preferred to set a minimum phase shift ($\varphi$) that ensures ZVS (depending on the cell voltages; for instance, by using a look up table, or analytically) and to use a controller to achieve the desired power transfer by varying switching frequency *(fsw).*

For a given pair of constant input and output voltages, increasing the switching frequency *(fsw)* will reduce the power, and vice versa. The lower the voltage, the lower the switching frequency *(fsw),* thus, there will be fewer switching losses but more conduction losses due to excess of reactive current. Conversely, at higher cell voltages, the switching frequency *(fsw)* will rise, increasing switching losses but reducing conduction losses. The maximum field density of the transformer is given at maximum cell voltage with high frequencies. While at lower cell voltages the field density peak is similar to the obtained with maximum voltages but with lower frequency.

In a preferred embodiment of the invention, the DC-DC converter may be a multi-port converter comprising:

- a transformer having a plurality of windings and a single core in common for all the windings,

- a set of DC-AC converters individually connected with the windings of the transformer, and adapted to be connected individually to DC sources and/or DC loads,

- a control unit adapted for controlling the operation of the converters, for converting a DC voltage into an AC signal, and

wherein the control unit is further adapted for operating the converters of the set of converters, such that power from at least one DC source/load can be transferred to one or more power modules through a selection of converters, when the converters are connected individually to the DC sources/loads.

All the converters may have the same topology or not, either full-bridge DC-AC converters, or half-bridge DC-AC converters, or any suitable combination thereof.

Preferably, when a multi-port converter is used with at least three modules operating simultaneously, in the control method a switching frequency (fsw) is selected in common to all connected cells that ensures ZVS.

The phase shift ($\varphi$) is different among different cells blocks, as it will be used to control power transfer between them. To deliver relatively low power with respect to the nominal power, the power can be pulsed. Another solution is to stop switching the secondary transistors or to switch them synchronously. In this way it is achieved that they work as a rectification with conventional diodes.

BRIEF DESCRIPTION OF THE DRAWINGS

Figure 1 shows an electric diagram of a Dual Active Bridge, DAB, converter topology according to the prior art.

Figure 2 shows a graph of voltages illustrating a phase shift control according to the prior art.

Figure 3 shows a graph of voltages illustrating a dual control to maintain ZVS according to the invention.

Figure 4 shows an electric diagram of a multi-port isolated converter topology according to the invention.

DESCRIPTION OF PREFERRED EMBODIMENTS OF THE INVENTION

**Figure 3** shows a graph of voltages (Vp,Vs) and current (il) illustrating the dual control method according of the invention, wherein the method comprises operating the converter by modifying the switching frequency (*fsw*) and the phase shift (*φ*) of the conversion process, to operate the converter under Zero Voltage Switching condition, ZVS.

In a preferred implementation of the invention, the converter is a Dual Active Bridge (DAB) converter, for example as the one shown in **Figure 1.** As explained earlier, the DAB is a bidirectional DC-DC converter with primary and secondary side full-bridges (1,1"), a high frequency transformer (2), an energy transfer inductor (Ls) and two DC-link capacitors (Cf1,Cf2).

The inductor (Ls) is connected in series between the output of the first full-bridge converter (1) and a terminal of the primary winding (2a) of the transformer (2). A first DC-link capacitor (Cf1) is connected in parallel with the two input terminals (1a,1b) of the first full-bridge converter (1), and the second DC-link capacitor (Cf2) is connected in parallel with the two output terminals (1a',1b') of the second full-bridge converter (1'). The input of the second full-bridge converter (1'), is connected in parallel with the secondary winding (2b) of the transformer (2).

Therefore, the voltage (Vp) is the output voltage of the first full-bridge converter (1), that is applied to the series connection formed by the inductor (Ls) and to the primary winding (2a) of the transformer (2), whereas, current (il) is the current through the inductor (Ls), and voltage (Vs) is the voltage at the secondary (2b) of the transformer.

Therefore, as shown in **Figure 3** the control method of the invention, involve modifying the phase shift (*φ*) between voltages (Vp,Vs), and also modifying the switching frequency (*fsw*) to operate the converter under Zero Voltage Switching condition.

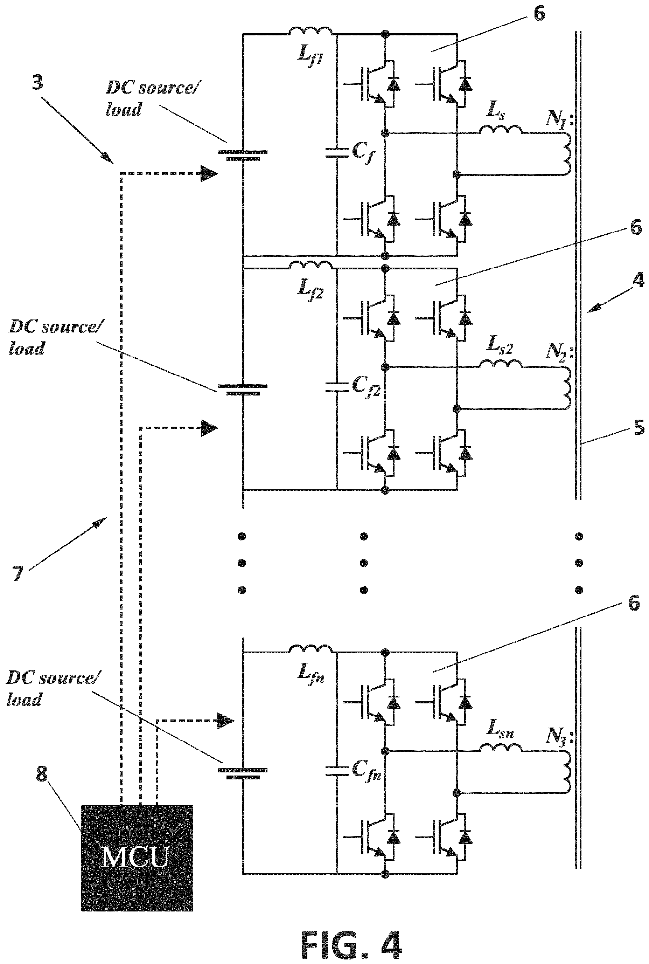

In the alternative embodiment of **Figure 4,** the DC-DC converter is a multi-port converter (3) comprising a transformer (4) having a plurality of windings (N1,N2,...,Nn) and a single core (5) in common for all the windings. In addition, the converter (3) has a set of full-bridge DC-AC converters (6) individually connected with the windings (N1,N2,...,Nn) of the transformer (4), and adapted to be connected individually with DC sources or loads (7).

A control unit (8) is provided for controlling the operation of the converters (6), for converting a DC voltage into an AC signal in a known manner.

Furthermore, the control unit (8) is further adapted for operating the converters (6) of the set of converters, such that power from at least one DC source/load can be transferred to one or more power modules through any selection of converters (6), when the converters are connected individually to the DC sources/loads.

Each converter (6) may be connected with the respective winding (N1,N2,...,Nn) by means of an inductor (Ls1, Ls2,..., Lsn) connected in series between the converter output and the respective winding of the transformer (4). In addition, each converter (6) of the set of converters may be connected to a DC source / load (7) by means of a filter, which in the example of **Figure 4,** includes a capacitor (Cf1, Cf2,..., Cfn) in parallel with the input port of each converter (6), and an inductor (Lf1, Lf2,..., Lfn) in series at the input port of each converter (6).

According to the invention, the conversion process between the two selected converters (6), is carried out as represented in n **Figure 3,** that is, by modifying the phase shift (*φ*) between voltages (Vp,Vs), and by modifying the switching frequency (*fsw*) to operate the converter under Zero Voltage Switching condition.

Although the present invention has been described in detail with reference to the preferred embodiment, it is to be understood that the present invention is not limited by the disclosed examples, and that numerous additional modifications and variations could be made there to by a person skilled in the art without departing from the scope of the invention.

**Claims**

1.  Control method for operating a power converter under Zero Voltage Switching (ZVS) conditions, wherein the converter is a DC-DC isolated converter, and the method comprises operating the converter by modifying the switching frequency (*fsw*) and the phase shift (*φ*) of the converter, to operate the converter under Zero Voltage Switching condition.

2.  Control method according to claim 1, further comprising setting for a given input and output voltage of the converter and/or for a given switching frequency (*fsw*), a minimum phase shift (*φ*) value at which the converter operates under ZVS condition, and controlling power transfer in the converter by controlling the switching frequency (*fsw*) of the same.

3.  Control method according to claim 2, wherein the minimum phase shift (*φ*) value, is calculated analytically by computing the minimum phase shift of each semiconductor switch of the converter and selecting the maximum phase shift obtained.

4.  Control method according to claim 2, wherein the minimum phase shift (*φ*) value, is obtained by measuring current through an inductor (Ls) connected in series between two bridges of the converter and during the switching process.

5.  Control method according to claim 1, further comprising setting a switching frequency (*fsw*) to assure ZVS operation of the converter, and controlling power transfer by controlling phase shift ($\varphi$) in the converter.

6. Control method according to claim 1, further comprising setting a phase shift ($\varphi$) to assure ZVS operation of the converter, and controlling power transfer by controlling switching frequency (*fsw*) in the converter.

7. Control method according to any of the preceding claims, wherein the DC-DC converter is a two-port Dual Active Bridge (DAB) converter that comprises a transformer having two windings, and a first bridge converter coupled to a winding of the transformer, and a second bridge converter connected to the other winding of the transformer, and an inductor connected in series between the output port of one of the bridge converter and the winding connected to it.

8. Control method according to any of the claims 1 to 6, wherein the DC-DC converter is a multi-port converter comprising:

   a transformer (4) having a plurality of windings (N1,N2...,Nn) and a single core (5) in common for all the windings,
   a set of DC-AC converters (6) individually connected with the windings (N1,N2...,Nn) of the transformer (4), and adapted to be connected individually with a DC source or load,
   a control unit (8) adapted for controlling the operation of the converters (6), for converting a DC voltage into an AC signal, and

   wherein the control unit (8) is further adapted for operating the converters (6) of the set of converters, such that power from at least one DC source/load can be transferred to one or more power modules through a selection of converters (6), when the converters are connected individually to the DC sources/loads.

9. Control method according to any of the preceding claims, wherein all the converters are full-bridge DC-AC converters, or wherein all the converters half-bridge DC-AC converters.

**FIG. 1**
PRIOR ART

**FIG. 2**
**PRIOR ART**

**FIG. 3**

**FIG. 4**

Europäisches
Patentamt

European
Patent Office

Office européen
des brevets

# EUROPEAN SEARCH REPORT

Application Number

EP 22 38 3006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/366213 A1 (WATANABE MASAO [JP] ET AL) 19 November 2020 (2020-11-19) <br> * figures 1, 7 * <br> * paragraph [0001] * <br> * paragraph [0076] * <br> * paragraph [0080] * | 1-9 | INV. <br> H02M1/00 <br> H02M3/335 |
| X | GAO YIHAN ET AL: "Analysis and Design of a Control Strategy for Wide-Range ZVS of Isolated Bidirectional Dual-Bridge Series Resonant DC/DC Converters", <br> 2019 10TH INTERNATIONAL CONFERENCE ON POWER ELECTRONICS AND ECCE ASIA (ICPE 2019 - ECCE ASIA), THE KOREAN INSTITUTE OF POWER ELECTRONICS (KIPE), <br> 27 May 2019 (2019-05-27), pages 3116-3121, XP033596863, <br> [retrieved on 2019-08-13] <br> * abstract; figures 1, 6, 8 * <br> * Chapter III * | 1-9 | |
| X | HAN WEIJIAN ET AL: "Control Technique for Wide-Range ZVS of Bidirectional Dual-bridge Series Resonant dc-dc Converters", <br> 2018 IEEE 19TH WORKSHOP ON CONTROL AND MODELING FOR POWER ELECTRONICS (COMPEL), IEEE, <br> 25 June 2018 (2018-06-25), pages 1-8, XP033402373, <br> DOI: 10.1109/COMPEL.2018.8460141 <br> [retrieved on 2018-09-10] <br> * abstract; figures 1, 2, 4 * <br> * Chapter II * | 1-9 | TECHNICAL FIELDS SEARCHED (IPC) <br><br> H02M |
| A | EP 3 971 019 A1 (HUAWEI DIGITAL POWER TECH CO LTD [CN]) 23 March 2022 (2022-03-23) <br> * figure 3 * | 1-9 | |

The present search report has been drawn up for all claims

| Place of search | Date of completion of the search | Examiner |
|---|---|---|
| The Hague | 13 March 2023 | Madouroglou, E |

EPO FORM 1503 03.82 (P04C01)

## ANNEX TO THE EUROPEAN SEARCH REPORT
## ON EUROPEAN PATENT APPLICATION NO.

EP 22 38 3006

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2023

| Patent document cited in search report | | Publication date | Patent family member(s) | | Publication date |
|---|---|---|---|---|---|
| US 2020366213 | A1 | 19-11-2020 | CN | 110999059 A | 10-04-2020 |
| | | | JP | 6883489 B2 | 09-06-2021 |
| | | | JP | 2019041433 A | 14-03-2019 |
| | | | US | 2020366213 A1 | 19-11-2020 |
| | | | WO | 2019039487 A1 | 28-02-2019 |
| EP 3971019 | A1 | 23-03-2022 | CN | 110774909 A | 11-02-2020 |
| | | | CN | 111251916 A | 09-06-2020 |
| | | | CN | 114746301 A | 12-07-2022 |
| | | | EP | 3950411 A1 | 09-02-2022 |
| | | | EP | 3971019 A1 | 23-03-2022 |
| | | | WO | 2021056976 A1 | 01-04-2021 |
| | | | WO | 2021057195 A1 | 01-04-2021 |
| | | | WO | 2021057780 A1 | 01-04-2021 |

EPO FORM P0459

For more details about this annex : see Official Journal of the European Patent Office, No. 12/82